# DEMANDE DE BREVET EUROPEEN

(11) **EP 3 564 622 A1**
(43) Date de publication de la demande: **06.11.2019**
(21) Numéro de dépôt: 19168294.7
(22) Date de dépôt: 10.04.2019
(51) Int. Cl.: G01C 21/20, G01C 23/00

(54) **PROCÉDÉ DE PLANIFICATION D'UN CHEMIN AÉRIEN POUR AÉRONEF, SYSTÈME DE PLANIFICATION ASSOCIÉ ET AÉRONEF ÉQUIPÉ D'UN TEL SYSTÈME**

(30) Priorité: 30.04.2018 FR 1800387
(71) Demandeur: Airbus Helicopters, 13725 Marignane Cedex (FR); Université de Valenciennes et du Hainaut-Cambresis, 59313 Valenciennes Cedex 9 (FR)
(72) Inventeur: FEYZEAU, Pierre, 13880 VELAUX (FR); BAKLOUTI, Zeineb, 59300 FAMARS (FR); DUVIVIER, David, 59178 HASNON (FR); BENATITALLAH, Rabie, 78140 Vélizy-Villacoublay (FR)
(74) Mandataire: GPI & Associés

(57) **Abrégé**

La présente invention concerne un procédé et un système de planification (2) d'un chemin aérien pour un aéronef (1), ledit système (2) comportant une unité d'extraction pour extraire d'une unité de stockage des premières données, lesdites premières données étant issues d'au moins une base de données « terrain » contenant des données topographiques d'une zone de vol lors d'une mission dudit aéronef (1).

## Description

La présente invention se rapporte au domaine des procédés de planification d'un chemin aérien, ou d'un plan de vol, pour un aéronef. De tels procédés de planification peuvent être mis en oeuvre préalablement à une mission de l'aéronef ou encore en vol lors d'une mission de l'aéronef.

Un système de planification correspondant pour mettre en oeuvre un tel procédé de planification peut alors être installé en tout ou partie dans une station au sol ou encore être embarqué en tout ou partie sur un aéronef. En outre, un tel aéronef mettant en oeuvre un tel procédé de planification peut être formé par un avion, un giravion, un drone de type multirotor comportant par exemple au moins trois rotors juxtaposés les uns à côté des autres en étant agencés sensiblement dans un même plan. Cet aéronef peut par ailleurs embarquer à son bord un équipage comportant au moins un pilote ou alternativement n'embarquer aucun pilote ni aucun passager ou encore être un aéronef dans lequel un pilote peut embarquer optionnellement à bord de celui-ci.

Ce système de planification permet alors d'obtenir différents profils de plan de vol selon le type de la mission et les performances de l'aéronef, en fonction du relief et/ou des obstacles de la zone de vol de la mission et/ou en fonction de conditions météorologiques courantes et/ou en prévision.

Le système de planification doit ainsi être en mesure de d'effectuer des calculs pour discrétiser l'espace en trois dimensions de la zone de vol de l'aéronef et pour générer un plan de vol en évitant les éventuels obstacles et/ou des conditions météorologiques trop risquées pour l'aéronef.

De façon générale, et tel que décrit dans le document US 4 812 990, il est connu de générer un plan de vol optimal en deux dimensions dans un environnement dynamique entre deux positions données de l'espace. En effet dans ce cas, un tel système de planification discrétise un rectangle délimité par deux points en une grille régulière puis ce système de planification applique une méthode de programmation dynamique. Cette méthode calcule alors un chemin optimum qui est fonction d'un coût résultant d'une combinaison entre des coûts engendrés par le relief, par des risques, par des déviations par rapport à une ligne centrale et par la longueur du trajet. A chaque itération, un algorithme met à jour les coûts induits par chacun des sommets. La méthode appliquée est optimale mais elle requiert un temps de calcul important peu adapté avec les zones de vol étendues.

En outre, un tel procédé de planification n'est pas applicable en vol dans des situations critiques nécessitant un résultat avec un temps de calcul court. Par ailleurs, la discrétisation de l'espace en seulement deux dimensions dans la zone rectangulaire délimitée entre le point de départ et le point d'arrivée peut éliminer des solutions intéressantes telles que par exemple en contournant des obstacles plutôt que de suivre un plan de vol direct avec des fortes variations d'altitude.

Par ailleurs, tel que décrit dans le document US 6 266 610, il est également connu de calculer la trajectoire d'un aéronef selon ses caractéristiques d'exploitation tels que son temps de vol, sa quantité de carburant embarquée, des évitements de régions de conflits politiques ou encore la distance de vol et des phénomènes relatifs à l'environnement dynamique en trois dimensions.

La planification du chemin aérien comprend deux composantes telles une composante latérale, permettant de minimiser une fonction coût, et une composante verticale, reposant sur un calcul des variations d'altitude. En outre, la planification de la composante verticale est mise à jour à chaque itération de la planification de la composante latérale reposant sur une solution obtenue à l'aide d'une méthode de programmation dynamique appliquée sur une grille régulière entre une position de départ et une position d'arrivée du chemin aérien.

Cependant, un tel système de planification présente des limitations. La programmation dynamique est très complexe et nécessite des temps de calcul très longs à mettre en oeuvre pour aboutir à une solution de chemin aérien optimal. De plus, le découplage entre la planification de la composante latérale et celle de la composante verticale agit sur la qualité de la solution et nécessite un temps de calcul supplémentaire. Un tel système de planification est donc incompatible pour permettre, par exemple en cas d'urgence, une nouvelle planification dynamique en vol d'un chemin aérien pour l'aéronef.

De même, les documents US 6 085 147 et FR 2969 753 décrivent également des systèmes de planification permettant de déterminer un plan de vol en trois dimensions entre une position de départ et une position d'arrivé dans un environnement dynamique tout en appliquant une méthode de programmation dynamique sur un graphe en trois dimensions. La solution permet de minimiser une fonction coût qui est fonction du temps de vol de l'aéronef, du carburant consommé et des dangers présents dans la zone de vol.

Chacun des critères d'optimisation dépend des paramètres liés aux performances de l'aéronef et aux variations de l'environnement durant le vol. Pour la mise à jour, des capteurs sont utilisés afin de détecter et de communiquer toute information à l'origine d'un changement. L'espace en trois dimensions entre les points de départ et d'arrivée est discrétisé avec une grille régulière en trois dimensions. Un graphe 3D de type orienté est alors construit depuis une position de départ vers une position d'arrivée. A chaque arc du graphe 3D est affecté un coût variable en fonction du temps nécessaire pour que l'aéronef le parcourt. Enfin, une méthode de programmation dynamique est appliquée sur le graphe 3D afin de déduire le plus court chemin.

Cependant, un tel graphe 3D est construit à partir d'un maillage régulier, ce qui consomme énormément d'espace mémoire pour des terrains étendus avec une fine précision. D'ailleurs, le graphe est composé d'un ensemble d'arcs permettant de relier uniquement deux sommets voisins. Ceci influence la qualité de la solution pour les chemins de grande distance comme il n'est pas possible de créer des arcs directs entre deux sommets éloignés.

De plus, l'algorithme de recherche de plus court chemin est optimal car il est basé sur une programmation dynamique mais son application sur des graphes 3D de grande taille implique une complexité de calcul importante, incohérente avec l'environnement dynamique du système décrit.

Au surplus, pour planifier un chemin aérien, le système de planification considère uniquement l'espace situé entre les positions de départ et d'arrivée. Pour certains types d'aéronef, il est possible de revenir en arrière avant de trouver le plus court chemin en ces deux points de départ et d'arrivée. Ainsi, le fait d'appliquer une telle discrétisation prédéterminée entre les deux points de départ et d'arrivée, rend impossible la réutilisation du graphe 3D précédemment généré pour d'autres chemins aériens.

Le document US 6 259 988 décrit quant à lui un procédé de planification en temps réel mais nécessitant la connaissance des coordonnées d'un point d'arrivée. Un tel procédé ne permet donc pas de déterminer un chemin aérien en temps réel vers une destination non prédéterminée.

En outre, il est également connu, tel que décrit dans le document WO 2014 77913, un système de planification en trois dimensions de nouvelles trajectoires aptes à être transmises à l'aéronef, en cas d'urgence, par des moyens de communication sans fil.

Cependant comme précédemment, une telle solution ne permet donc pas d'anticiper un éventuel danger en déterminant, en temps réel, un chemin aérien vers une destination non prédéterminée.

Il est également décrit dans le document EP 1 065 470 un procédé de planification d'un chemin aérien pour un aéronef à partir d'une partition de l'espace tridimensionnel selon un maillage adaptatif de type « Oct-tree », c'est à dire subdivisé récursivement en huit octants.

Cependant, un tel procédé de planification utilisant un maillage adaptatif en trois dimensions est complexe à réaliser. Ainsi, une telle étape de partition de l'espace puis une étape de construction d'un graphe 3D permettant une planification d'un chemin aérien demandent de nombreux calculs et/ou nécessitent des capacités de calcul et de stockage de données très importantes.

L'utilisation d'un tel procédé de planification ne semble donc pas optimale pour déterminer rapidement et simplement un chemin aérien en temps réel vers une destination non prédéterminée et/ou générerait une masse supplémentaire importante à embarquer dans l'aéronef.

La présente invention a alors pour objet de proposer un procédé de planification de chemin aérien, un système de planification correspondant et un aéronef équipé d'un tel système permettant de s'affranchir des limitations mentionnées ci-dessus. En outre, l'invention permet de fournir une solution optimale pour permettre de réaliser, ou de modifier en temps réel, un chemin aérien le plus rapide à effectuer, et/ou le moins onéreux, avec un volume d'encombrement minimal du système de planification et/ou une masse de ce système qui soit minimale.

L'invention concerne donc un procédé de planification d'un chemin aérien pour un aéronef, ce procédé comportant une première étape d'extraction pour extraire des premières données, ces premières données étant issues d'au moins une base de données « terrain » contenant des données topographiques d'une zone de vol lors d'une mission de l'aéronef.

Selon l'invention, un tel procédé est remarquable en ce qu'il comporte au moins :
- une étape de discrétisation horizontale pour discrétiser en plusieurs paliers parallèles la zone de vol de l'aéronef, les paliers parallèles étant agencés parallèlement entre eux et régulièrement espacés les uns des autres suivant une direction en élévation Z ;
- des étapes successives de génération pour générer un maillage adaptatif pour chacun des paliers, le maillage adaptatif comportant d'une part des cases interdites pour le chemin aérien et d'autre part des cases autorisées pour le chemin aérien, les cases interdites/autorisées pour le chemin aérien étant générées au moins à partir des premières données, les cases interdites/autorisées comportant respectivement chacune une longueur suivant une direction longitudinale X et une largeur suivant une direction transversale Y, la longueur et la largeur de chacune des cases interdites/autorisées du maillage adaptatif étant générées itérativement en fonction d'une densité de cases interdites ;

- des étapes successives de construction pour construire un premier ensemble formé par une pluralité de graphes 2D non-orientés en deux dimensions, chaque graphe 2D étant généré pour chacun des paliers et comportant une pluralité de sommets agencés au milieu des cases autorisées pour le chemin aérien et une pluralité d'arêtes reliant deux sommets entre eux sans couper l'une des cases interdites les graphes 2D correspondant, pour chacun des paliers, à un ensemble de positions autorisées pour le chemin aérien,
- des étapes successives de détermination pour déterminer un deuxième ensemble formé par une pluralité d'arcs de raccordement pour chacun des sommets des graphes 2D, chaque arc de raccordement s'étendant entre un premier sommet appartenant à un premier graphe 2D correspondant à un premier palier et un deuxième sommet appartenant à un deuxième graphe 2D correspondant à un deuxième palier, les premier et deuxième paliers étant formés par deux paliers consécutifs agencés l'un au dessus de l'autre, et
- une étape de fusion pour fusionner le premier ensemble formé par les graphes 2D avec le deuxième ensemble formé par les arcs de raccordement, l'étape de fusion générant un graphe 3D non-orienté en trois dimensions permettant une planification d'un chemin aérien pour l'aéronef.

Autrement dit, un tel procédé de planification permet de générer différentes solutions de plans de vol selon différents critères de sélection parmi les trajectoires possibles fournies par le graphe 3D non orienté. En outre, ces solutions de plans de vol sont capables de s'adapter au type d'aéronef et/ou au type de mission et/ou à des critères de sélection choisis par une personne, telle que par exemple un pilote, en charge de la planification de chemins aériens. L'étape de discrétisation horizontale permet, en fonction du pas choisi entre deux paliers consécutifs, d'adapter la qualité des chemins aériens et de générer automatiquement un plan de vol avec une densité de solutions possibles paramétrables.

De plus, un tel procédé de planification permet d'offrir plusieurs solutions de plan de vol correspondant à différents compromis entre le temps nécessaire à l'exécution du plan de vol et à la qualité du chemin aérien en fonction du temps de calcul disponible qui est éventuellement corrélé avec la criticité d'une situation en vol.

La phase de routage de l'aéronef peut être réalisée en fonction du chemin aérien planifié selon un objectif à minimiser tel que la distance totale entre un point de départ et un point d'arrivée, la quantité de carburant consommée ou encore le temps nécessaire pour effectuer le chemin aérien.

Avantageusement, le maillage adaptatif peut être de type « Quadtree », en langue anglaise, correspondant à une structure de données de type « arbre d'arité 4 » c'est-à-dire comportant une pluralité de noeuds reliés entre eux respectivement chacun par quatre fils.

Selon un tel exemple de réalisation, le maillage de type Quadtree permet en effet de réduire la taille de la mémoire nécessaire par rapport à une solution utilisant un maillage régulier. Cette méthode de découpage de l'espace en deux dimensions de chaque palier permet également d'ajuster la précision du maillage en fonction des performances de vol propres à l'aéronef.

En pratique, la longueur et/ou la largeur de certaines des cases autorisées peu(ven)t être récursivement réduites.

En d'autres termes, pour chacun des paliers, la décomposition des cases autorisées peut être «sur-échantillonnée », par rapport à un maillage adaptatif de type Quadtree standard, plus l'on s'écarte de cases interdites. De cette manière, le procédé de planification permet de générer un plus grand nombre de noeuds de manière à générer un plus grand nombre de solutions possibles pour effectuer des changements de paliers lorsque l'aéronef est loin des cases interdites du maillage.

Selon un exemple de réalisation avantageux de l'invention, le procédé peut comporter une deuxième étape d'extraction pour extraire des deuxièmes données, les deuxièmes données étant issues d'au moins une base de données météorologique contenant des données météorologiques de la zone de vol de l'aéronef et/ou d'une base de données obstacles contenant des données d'obstacles matériels de la zone de vol de l'aéronef, les cases interdites/autorisées pour le chemin aérien étant générées à partir des premières et deuxièmes données.

Ainsi, les cases interdites peuvent par exemple être déterminées par la présence d'un obstacle, d'un relief ou encore d'un orage, de la grêle, de fortes pluies ou de vents violents.

Avantageusement, les arêtes des graphes 2D peuvent comporter respectivement chacune une longueur maximale inférieure à une valeur de seuil prédéterminée.

De cette manière, il est possible d'adapter la complexité du graphe 3D en modifiant la valeur de seuil prédéterminée. En effet, plus cette valeur de seuil prédéterminée est petite et plus le nombre d'arêtes des graphes 2D est réduit. La densité du nombre d'arêtes des graphes 2D est ainsi ajustée pour adapter une taille de mémoire nécessaire au stockage des graphes 2D. A l'inverse, plus cette valeur de seuil est élevée et plus le nombre d'arêtes augmente ce qui entraîne une augmentation du temps de calcul des graphes 2D et de la taille de la mémoire nécessaire. Cependant, plus cette valeur de seuil est élevée plus le chemin obtenu est optimal et plus le temps de calcul du chemin est réduit.

En outre, la valeur de seuil prédéterminée qui peut être fonction d'un « coefficient de voisinage » consistant en un nombre entier compris, par exemple, entre 1 et 5 et être obtenue en multipliant ce « coefficient de voisinage » par la diagonale de chaque case du Quadtree. Un tel coefficient de voisinage permet alors, pour chaque sommet, de déterminer le voisinage du sommet correspondant. Ceci permet d'ajuster le degré de connexité des graphes 2D tout en respectant l'hétérogénéité du maillage.

En pratique, la longueur maximale des arêtes des graphes 2D peut être paramétrable en fonction de chacun des paliers.

Par exemple pour les paliers correspondant à des altitudes élevées comportant potentiellement peu de cases interdites, le maillage adaptatif est généralement grossier. Une valeur de seuil prédéterminée petite est suffisante pour offrir une qualité de solution adéquate au cas d'utilisation avionique.

En revanche, pour les paliers correspondant à des altitudes plus faibles, il peut être préférable d'utiliser une valeur de seuil prédéterminée plus importante. Ceci permet en effet de relier entre eux plus de sommets et par conséquent d'augmenter le nombre de solutions possibles pour le plan de vol.

Selon un autre exemple de réalisation avantageux de l'invention, le deuxième ensemble formé par une pluralité d'arcs de raccordement peut comporter une pluralité de sous-ensembles formés respectivement, à chaque sommet d'un graphe 2D éloigné des cases interdites, par un volume en forme de cône de révolution creux, la forme de cône creux étant délimitée d'une part par une première surface conique de révolution correspondant à un angle minimal αₘᵢₙ de montée/descente de l'aéronef depuis un premier sommet du premier graphe 2D vers un premier cercle du deuxième graphe 2D et d'autre part par une deuxième surface conique de révolution correspondant à un angle maximal αₘₐₓ de montée/descente de l'aéronef depuis le premier sommet du premier graphe 2D vers un second cercle du deuxième graphe 2D, les angles minimal αₘᵢₙ et maximal αₘₐₓ étant mesurés dans un plan vertical entre un plan horizontal défini par le premier palier du premier graphe 2D et respectivement des première et deuxième génératrices des première et deuxième surfaces coniques de révolution passant respectivement par le premier cercle du deuxième graphe 2D et le second cercle du deuxième graphe 2D.

Par suite, le deuxième ensemble comporte tous les arcs pouvant être construits dans le volume en forme de cône de révolution creux et délimité par les première et deuxième surfaces coniques de révolution. Cette forme de cône de révolution creux peut être variable entre deux sommets distincts d'un même graphe 2D ou de deux graphes 2D distincts l'un de l'autre. Autrement dit, l'intersection entre le deuxième graphe 2D et la forme de cône de révolution creux est définie par une surface plane en forme de couronne circulaire délimitée par deux cercles concentriques entre lesquels tous les sommets présents sont candidats à servir d'ancrage pour constituer des arcs de raccordement avec le premier sommet du premier graphe 2D.

Avantageusement, le deuxième ensemble formé par une pluralité d'arcs de raccordement peut comporter une pluralité de sous-ensembles formés respectivement, à chaque sommet d'un graphe 2D proche d'une case interdite, par un volume de forme quelconque présentant au moins partiellement une forme de cône de révolution creux, la forme de cône creux étant délimitée d'une part par une première surface conique de révolution correspondant à un angle minimal αₘᵢₙ de montée/descente de l'aéronef depuis un premier sommet du premier graphe 2D vers un premier cercle du deuxième graphe 2D et d'autre part par une deuxième surface conique de révolution correspondant à un angle maximal αₘₐₓ de montée/descente de l'aéronef depuis le premier sommet du premier graphe 2D vers un second cercle du deuxième graphe 2D, les angles minimal αₘᵢₙ et maximal αₘₐₓ étant mesurés dans un plan vertical entre un plan horizontal défini par le premier palier du premier graphe 2D et respectivement des première et deuxième génératrices des première et deuxième surfaces coniques de révolution passant respectivement par le premier cercle du deuxième graphe 2D et le second cercle du deuxième graphe 2D.

Ainsi, si un obstacle empêche de construire un arc de raccordement, celui-ci n'est pas construit et ne fait donc pas partie du deuxième ensemble formé par une pluralité d'arcs de raccordement. Une méthode de tracé de segments en trois dimensions est ainsi appliquée à chacun des sommets pour déterminer si un obstacle peut entrer en collision avec l'un des arcs de raccordement.

En pratique, pour l'ensemble des sommets des graphes 2D, l'angle minimal αₘᵢₙ de montée/descente de l'aéronef et l'angle maximal αₘₐₓ de montée/descente de l'aéronef peuvent être respectivement variables en fonction d'un type de mission de l'aéronef et/ou des performances de vol de l'aéronef.

De cette façon, il est possible de modifier simultanément pour chacun des sommets des graphes 2D, la forme de chacun des cônes creux de révolution en modifiant les limitations angulaires de l'aéronef correspondant aux valeurs de l'angle minimal αₘᵢₙ de montée/descente de l'aéronef et de l'angle maximal αₘₐₓ de montée/descente de l'aéronef.

Selon encore un autre exemple de réalisation avantageux de l'invention, pour l'ensemble des sommets des graphes 2D, l'angle minimal αₘᵢₙ de montée/descente de l'aéronef et l'angle maximal αₘₐₓ de montée/descente de l'aéronef peuvent être respectivement variables en fonction d'un type de mission de l'aéronef et/ou des performances de vol de l'aéronef.

Avantageusement, le procédé peut comporter une étape d'optimisation pour optimiser au moins une trajectoire de décollage et/ou d'atterrissage.

Autrement dit, une optimisation des axes de décollage et d'approche est calculée pour relier un point géographique au sol jusqu'à une hauteur de sécurité correspondant à un palier d'un graphe 2D généré lors d'une phase de prétraitement.

Pour la phase de décollage, il s'agit de déterminer le meilleur axe de montée, selon une route particulière et une pente précise, en fonction des obstacles présents et du vent.

Si le départ a lieu depuis un terrain aménagé telle une piste, une hélisurface ou un héliport, l'étape d'optimisation peut alors restreindre la recherche de l'axe aux contraintes réglementaires du terrain.

Cette étape d'optimisation peut ainsi privilégier par ordre de priorité décroissant :
- la recherche d'une route dans les contraintes réglementaires applicables pour les terrains aménagés,
- la recherche d'une route face au vent en fonction d'une valeur minimale mesurée de la force du vent,
- la recherche d'une route en direction de la destination.

Chaque route peut alors faire l'objet d'une vérification de l'évitement des obstacles pour une pente maximisant la vitesse de montée/descente. Si nécessaire, la pente peut être augmentée pendant une durée correspondant à la phase de décollage jusqu'à une valeur limite prédéterminée.

Si aucune solution n'est trouvée pour la route optimale, d'autre routes, alternativement de part et d'autre de la route optimale peuvent être testées jusqu'à trouver une solution satisfaisante.

Cette étape d'optimisation permet de définir une route et une pente de décollage ainsi que le point d'intersection entre cet axe et le premier palier accessible du graphe 3D. Ce point sert alors à initier le chemin aérien.

Pour la phase d'approche, la recherche est comparable au cas du décollage avec en plus l'introduction d'une contrainte supplémentaire lors de la phase de vérification de l'évitement d'obstacles. En effet, la route de descente de l'aéronef prolongée au-delà du point cible doit être sans obstacles afin de permettre une remise des gaz en toute sécurité dans le cas d'une phase d'approche manquée.

Cette opération permet de définir une route particulière et une pente d'approche finale ainsi que le point d'intersection entre cet axe et le dernier palier accessible du graphe 3D avant d'entrer en contact avec le sol. Ce point d'intersection constitue alors la cible à atteindre pour la fin du chemin aérien.

En pratique, le procédé peut comporter une étape de construction pour construire le chemin aérien pour l'aéronef en calculant le plus court chemin entre un point de départ et un point d'arrivée sur le graphe 3D, le chemin aérien comportant au moins un tronçon ascendant, au moins un tronçon horizontal et au moins un tronçon descendant.

En d'autres termes, l'étape de construction consiste à appliquer un algorithme de calcul du « plus court chemin » sur le graphe 3D construit afin de trouver un plan de vol entre deux points du terrain en respectant un certain nombre de contraintes liées à l'aéronef, la mission et l'environnement. Un tel algorithme de calcul du plus court chemin peut ainsi explorer le graphe 3D notamment durant une mission de l'aéronef. La détection d'obstacles effectuée préalablement à la mission de l'aéronef permet alors de limiter la durée d'une telle étape de construction.

En effet, lors de la construction du graphe 3D un coût est associé à chaque arc de raccordement et à chaque arête des graphes 2D en termes de distance. L'étape de construction permet ainsi de déterminer l'ensemble des sommets intermédiaires permettant de minimiser la distance totale entre les points de départ et d'arrivée. Le coût d'un arc de raccordement ou d'une arête en termes de distance peut être calculé dans une phase de prétraitement car il est invariant lors de la phase de mission ce qui réduit la durée de l'étape de construction.

De plus, les plans de vol générés lors de l'étape de construction comportent de nombreuses arêtes sensiblement alignées entre elles dans un même palier et de nombreuses variations de pente selon les arcs de raccordement entre deux paliers.

Par suite, le procédé peut comporter au moins une première étape de simplification mise en oeuvre après l'étape de construction, la (ou les) première(s) étape(s) de simplification permettant de simplifier le chemin aérien pour l'aéronef en supprimant des zigzags dans au moins un tronçon horizontal.

Ainsi dans un même plan horizontal correspondant à un palier d'un graphe 2D, il peut être avantageux de limiter le nombre de zigzags jusqu'à obtenir une complexité comparable à celle d'un plan de vol créé manuellement. Cette simplification du chemin aérien dans les plans horizontaux permet de faciliter une surveillance du vol par le pilote, d'améliorer le confort en réduisant le nombre de transitions selon différentes orientations angulaires et, le cas échéant, de manipuler un plan de vol moins complexe si le pilote souhaite le modifier par la suite.

Selon un autre exemple de réalisation avantageux de l'invention, le procédé peut comporter au moins une deuxième étape de simplification mise en oeuvre après l'étape de construction, la (ou les) deuxième(s) étape(s) de simplification permettant de simplifier le chemin aérien pour l'aéronef en remplaçant au moins un tronçon horizontal situé entre deux tronçons ascendants par un autre tronçon ascendant ou alternativement en remplaçant au moins un tronçon horizontal situé entre deux tronçons descendants par un autre tronçon descendant.

Dans le plan vertical, le plan de vol généré comporte de nombreuses ruptures de pente, des paliers courts et des descentes suivies immédiatement de montées. Cette (ou ces) deuxième(s) étape(s) de simplification consiste(nt) à supprimer tous les tronçons horizontaux courts, c'est-à-dire comportant une longueur inférieure à une valeur de seuil prédéterminée, situés entre deux tronçons ascendants ou entre deux tronçons descendants. Chaque nouveau tronçon créé est alors agencé au-dessus des deux tronçons supprimés.

Avantageusement, le procédé peut comporter au moins une troisième étape de simplification mise en oeuvre après l'étape de construction, la (ou les) troisième(s) étape(s) de simplification permettant de simplifier le chemin aérien pour l'aéronef en remplaçant au moins un tronçon descendant suivi d'un tronçon ascendant par un tronçon horizontal.

Ainsi, la troisième étape de la simplification consiste à identifier chaque transition ponctuelle d'un tronçon descendant suivie d'un tronçon ascendant et de la supprimer en prolongeant le tronçon horizontal de plus basse altitude jusqu'à joindre le tronçon ascendant/descendant partiellement supprimé.

En pratique, le procédé peut comporter au moins une quatrième étape de simplification mise en oeuvre après l'étape de construction, la (ou les) quatrième(s) étape(s) de simplification permettant de simplifier le chemin aérien pour l'aéronef en remplaçant au moins deux tronçons ascendants consécutifs présentant deux angles de montée distincts par un unique tronçon ascendant avec un angle de montée constant ou alternativement en remplaçant au moins deux tronçons descendants consécutifs présentant deux angles de descente distincts par un unique tronçon descendant avec un angle de descente constant.

De cette manière, la quatrième étape de simplification consiste à supprimer des ruptures de pentes en calculant les pentes optimales de montée et descente compte tenu des performances de l'aéronef, des conditions météorologiques telles que la vitesse et la direction du vent et du profil de mission sélectionné. Cela peut alors entraîner une modification des points de début/fin de montée et des points de début/fin de descente.

Selon un autre exemple de réalisation avantageux de l'invention, le premier ensemble formé par les graphes 2D peut être limité à un nombre prédéterminé de graphes 2D situés en dessous d'une altitude maximale à ne pas dépasser par l'aéronef.

Autrement dit, une telle altitude maximale peut permettre de limiter le nombre de graphes 2D afin par exemple d'éviter des zones de danger causées par exemple par des conditions météorologiques telles qu'un manque de visibilité ou une présence potentielle de givre.

Avantageusement, le procédé peut être mis en oeuvre en tout ou partie lors d'une phase de prétraitement préalablement à une mission de l'aéronef.

En d'autres termes, une partie ou toutes les étapes du procédé peuvent être mises en oeuvre lorsque l'aéronef est au sol avant de commencer sa mission.

De façon alternative ou supplétive, le procédé peut également être mis en oeuvre en tout ou partie lors d'une mission de l'aéronef par au moins une unité de traitement embarquée à bord de l'aéronef.

Dans ce cas, une partie ou toutes les étapes du procédé peuvent être mises en oeuvre lorsque l'aéronef est en vol lors d'une mission.

La présente invention a aussi pour objet un système de planification d'un chemin aérien pour aéronef, ce système comportant une unité d'extraction pour extraire d'une unité de stockage des premières données, ces premières données étant issues d'au moins une base de données « terrain » contenant des données topographiques d'une zone de vol lors d'une mission de l'aéronef.

Un tel système est remarquable en ce qu'il comporte au moins une unité de traitement pour :
- discrétiser en plusieurs paliers parallèles la zone de vol de l'aéronef, les paliers parallèles étant agencés parallèlement entre eux et régulièrement espacés les uns des autres suivant une direction en élévation Z ;
- générer un maillage adaptatif pour chacun des paliers, le maillage adaptatif comportant d'une part des cases interdites pour le chemin aérien et d'autre part des cases autorisées pour le chemin aérien, les cases interdites/autorisées pour le chemin aérien étant générées au moins à partir des premières données, les cases interdites/autorisées comportant respectivement chacune une longueur suivant une direction longitudinale X et une largeur suivant une direction transversale Y, la longueur et la largeur de chacune des cases interdites/autorisées du maillage adaptatif étant générées itérativement en fonction d'une densité de cases interdites ;
- construire un premier ensemble formé par une pluralité de graphes 2D non-orientés en deux dimensions, chaque graphe 2D étant généré pour chacun des paliers et comportant une pluralité de sommets agencés au milieu des cases autorisées pour le chemin aérien et une pluralité d'arêtes reliant deux sommets entre eux sans couper l'une des cases interdites, les graphes 2D correspondant, pour chacun des paliers, à un ensemble de positions autorisées pour le chemin aérien,
- déterminer un deuxième ensemble formé par une pluralité d'arcs de raccordement pour chacun des sommets des graphes 2D, chaque arc de raccordement s'étendant entre un premier sommet appartenant à un premier graphe 2D correspondant à un premier palier et un deuxième sommet appartenant à un deuxième graphe 2D correspondant à un deuxième palier, les premier et deuxième paliers étant formés par deux paliers consécutifs agencés l'un au dessus de l'autre, et
- fusionner le premier ensemble formé par les graphes 2D avec le deuxième ensemble formé par les arcs de raccordement, et générer un graphe 3D non-orienté en trois dimensions permettant une planification d'un chemin aérien pour l'aéronef.

Enfin, l'invention se rapporte également à un aéronef remarquable en ce qu'il comporte un système de planification d'un chemin aérien tel que décrit ci-dessus et au moins une interface permettant à un pilote de l'aéronef de saisir et/ou de transférer des données de missions au système de planification.

L'invention et ses avantages apparaîtront avec plus de détails dans le cadre de la description qui suit avec des exemples donnés à titre illustratif en référence aux figures annexées qui représentent :
- la figure 1, une vue de côté illustrant schématiquement un aéronef conforme à l'invention,
- la figure 2, un schéma de principe d'un système de planification conforme à l'invention,
- les figures 3 et 4, deux logigrammes illustrant des étapes selon deux variantes du procédé de planification conforma à l'invention,
- la figure 5, une vue schématique en perspective d'une zone de vol de l'aéronef, conformément à l'invention,
- les figures 6 à 7, deux vues de dessus d'un premier exemple d'un maillage adaptatif réalisé respectivement dans deux paliers parallèles, conformément à l'invention,
- la figure 8, une vue de dessus d'un second exemple de maillage adaptatif réalisé dans le même palier que celui de la figure 7, conformément à l'invention,
- les figures 9 et 10, deux vues de dessus selon deux exemples de réalisation de graphes 2D réalisés dans un même palier selon deux « coefficients de voisinage » distincts, conformément à l'invention,
- les figures 11 et 12, deux vues en perspectives selon deux exemples de réalisation d'un deuxième ensemble formé par une pluralité d'arcs de raccordement, conformément à l'invention,
- la figure 13, quatre vues de dessus d'un chemin aérien illustrant une première étape de simplification, conformément à l'invention,
- les figures 14 à 16, trois vues de côté d'un chemin aérien illustrant respectivement une deuxième étape de simplification, une troisième étape de simplification et une quatrième étape de simplification, conformément à l'invention.

Les éléments présents dans plusieurs figures distinctes sont affectés d'une seule et même référence.

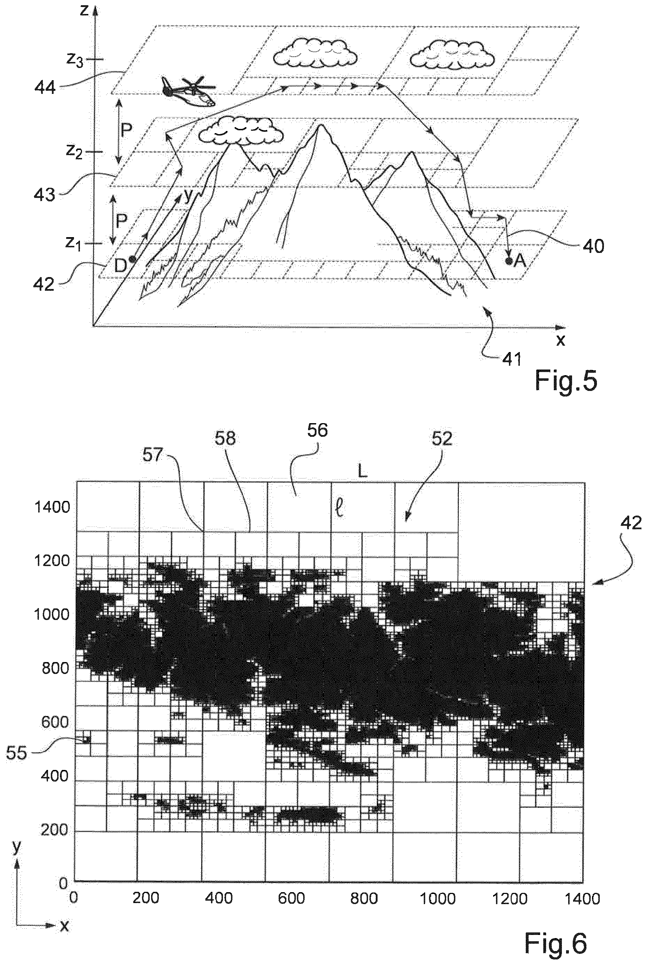

On note que trois directions X, Y et Z orthogonales les unes par rapport aux autres sont représentées sur les figures 5 à 16.

La direction X est dite longitudinale dans la mesure où le terme « longueur » est relatif à une dimension longitudinale L des cases autorisés/interdites de chaque palier selon cette direction longitudinale X.

Une autre direction Y est dite transversale. Le terme « largeur » est en effet relatif à une dimension transverse I des cases autorisés/interdites de chaque palier selon cette direction transversale Y.

Enfin, une troisième direction Z est dite en élévation et correspond aux dimensions en hauteur des obstacles ou du relief. Le terme d'altitude est en effet relatif à une dimension selon cette direction en élévation Z.

Comme déjà évoqué, l'invention se rapporte à un procédé de planification d'un chemin aérien pour un aéronef et à un système de planification pour aéronef.

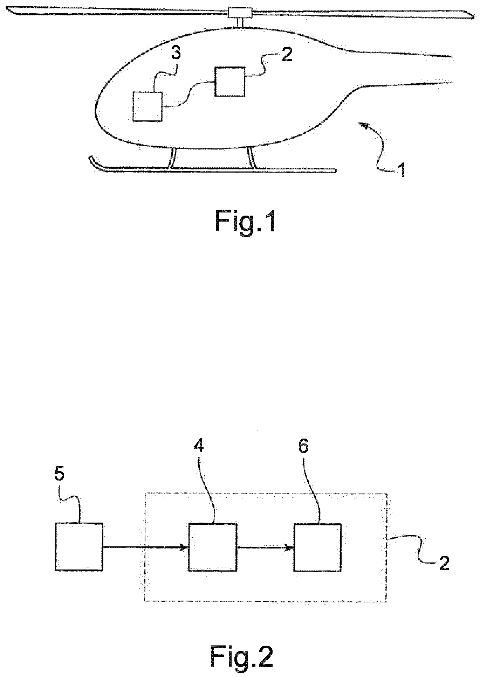

Tel que représenté à la figure 1, un tel aéronef 1 peut se présenter sous la forme d'un giravion à bord duquel un pilote peut embarquer mais pas nécessairement. Un tel aéronef peut en effet être un drone ou encore un aéronef de type à pilote optionnellement embarqué.

Ainsi, un tel aéronef 1 peut embarquer à son bord tout ou partie d'un système de planification 2 et au moins une interface 3 permettant à un pilote de l'aéronef 1 de saisir et/ou de transférer des données de mission au système de planification 2.

Un tel système de planification 2 peut alors commander un dispositif de pilotage automatique de l'aéronef pour piloter l'aéronef suivant un chemin aérien optimal permettant notamment de contourner des obstacles terrestres tels que le relief.

Une telle interface 3 peut comporter un écran permettant au pilote de visualiser et/ou de sélectionner une base de données « terrain » contenant des données topographiques d'une zone de vol lors d'une mission de l'aéronef 1. L'interface 3 permet également de sélectionner un type d'aéronef 1 pour que le système de planification 2 soit paramétré avec par exemple la masse à vide de l'aéronef 1, ses limitations angulaires en montée, en descente et lors d'un changement de direction suivant une trajectoire en lacet ou encore une fonction de performance liée à l'aéronef 1 pour effectuer une optimisation du temps de vol ou du carburant consommé sur le chemin aérien.

Une telle interface 3 peut également permettre au pilote de saisir un type de mission à réaliser pour déterminer le profil du plan de vol. À titre d'exemple, pour une mission de recherche et de sauvetage, le calcul du plan de vol doit aboutir à un chemin qui suit le relief du terrain. Pour une mission de transport de personnes, le calcul du parcours de l'aéronef doit minimiser le nombre de changements de paliers ainsi que les fortes manoeuvres de l'aéronef.

L'interface 3 peut également permettre au pilote de saisir un point de départ, une destination et des zones de passages ou d'étapes souhaitées.

L'interface 3 peut permettre aussi de saisir manuellement une quantité du carburant ou d'énergie motrice disponible. Un tel paramètre permet en effet de valider la faisabilité du chemin aérien calculé par le système de planification 2.

L'interface 3 peut permettre aussi de saisir la masse de l'aéronef 1 en charge correspondant par exemple à la somme de la masse initiale à vide, la masse du carburant embarqué, la masse de l'équipage et la masse de la charge embarquée à bord de l'aéronef 1.

L'interface 3 peut permettre aussi de sélectionner manuellement un plafond de navigation permettant alors d'éviter des zones de danger causées par exemple par les conditions météorologiques pouvant engendrer un manque de visibilité ou par des altitudes de vol présentant un risque de givrage. Ce paramètre permet aussi d'obtenir des profils de chemins aériens favorisant le vol en palier, plus confortable pour certains types de missions.

Enfin, l'interface 3 peut également permettre au pilote de saisir des limitations angulaires en montée, en descente et lors d'un changement de direction de l'aéronef. Si ces paramètres peuvent être déduits à partir du type de l'aéronef, le pilote peut cependant vouloir occasionnellement restreindre les capacités de l'aéronef afin d'éviter les fortes sollicitations qui ne sont pas souhaitables dans certains types de missions telle qu'une mission de transport de personnes ou d'assistance médicale.

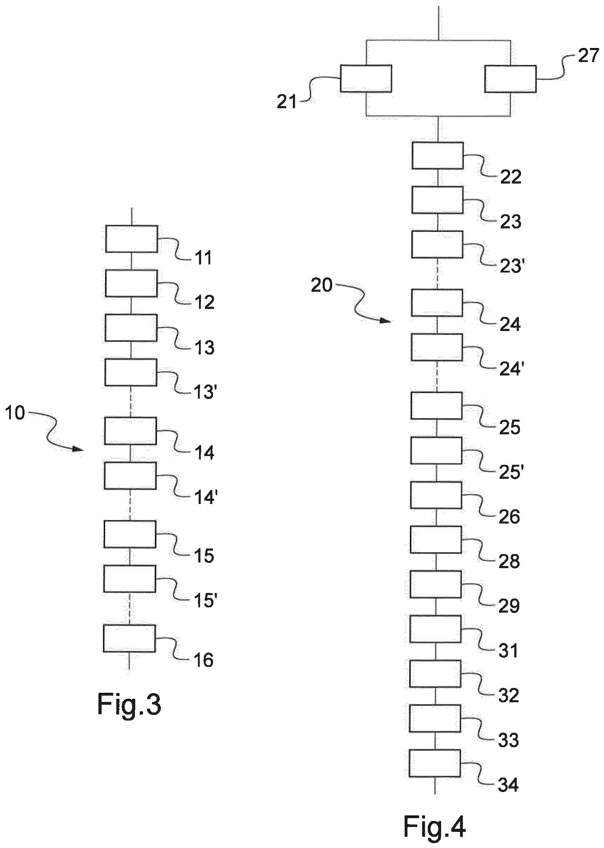

Tel que représenté à la figure 2, le système de planification 2 d'un chemin aérien comporte une unité d'extraction 4 pour extraire d'une unité de stockage 5 des premières données. Ces premières données sont issues d'au moins une base de données « terrain » contenant des données topographiques d'une zone de vol 41 lors d'une mission de l'aéronef 1. En outre, le système de planification 2 comporte également au moins une unité de traitement 6 embarquée à bord de l'aéronef 1 et permettant de mettre en oeuvre tout ou partie des différentes étapes des procédés de planification 10, 20 tels que décrits aux figures 3 et 4.

Ainsi selon les figures 3 et 4, le procédé de planification 10, 20 d'un chemin aérien pour un aéronef 1 comporte une première étape d'extraction 11, 21 pour extraire les premières données issues de la (ou des) base(s) de données « terrain » contenant des données topographiques de la zone de vol lors de la mission de l'aéronef 1.

En outre, le procédé 10, 20 comporte également une étape de discrétisation horizontale 12, 22 pour discrétiser la zone de vol, telle que décrite aux figures 5 à 8, en plusieurs paliers parallèles 42, 43, 44. Ces paliers parallèles 42, 43, 44 sont ainsi agencés parallèlement entre eux et régulièrement espacés les uns des autres suivant une direction en élévation Z.

Par ailleurs, un tel procédé 10, 20 comporte également des étapes successives de génération 13-13', 23-23' pour générer un maillage adaptatif 52, 53, 53', 54 pour chacun des paliers 42, 43, 44. Un tel maillage adaptatif 52, 53, 53', 54 comporte d'une part des cases interdites 55 pour le chemin aérien 40 et d'autre part des cases autorisées 56, 56' pour le chemin aérien 40.

En outre, pour le procédé de planification 10, de telles cases interdites 55/autorisées 56, 56' sont générées au moins à partir des premières données.

Le procédé de planification 20 comporte quant à lui également une deuxième étape d'extraction 27 pour extraire des deuxièmes données, ces deuxièmes données étant issues d'au moins une base de données météorologique contenant des données météorologiques de la zone de vol 41 et/ou une base de données obstacles contenant des données d'obstacles matériels de la zone de vol 41. Une telle deuxième étape d'extraction 27 peut ainsi être mise en oeuvre en parallèle de la première étape d'extraction 21.

Dans ce cas, pour le procédé de planification 20, les cases interdites 55/autorisées 56, 56' sont alors générées à partir des premières et deuxièmes données.

Par ailleurs telles que représentées aux figures 6 à 8, les cases interdites 55/autorisées 56, 56' comportent respectivement chacune une longueur L suivant une direction longitudinale X et une largeur I suivant une direction transversale Y. Cette longueur L et cette largeur I de chacune des cases interdites 55/autorisées 56, 56' du maillage adaptatif 52, 53, 53', 54 sont générées itérativement en fonction de la densité des cases interdites 55.

Tel que représenté aux figures 6 à 8, le maillage adaptatif 52, 53, 53', 54 est de type « Quadtree », en langue anglaise, correspondant à une structure de données de type arbre comportant une pluralité de noeuds 57 reliés entre eux respectivement chacun par quatre fils 58.

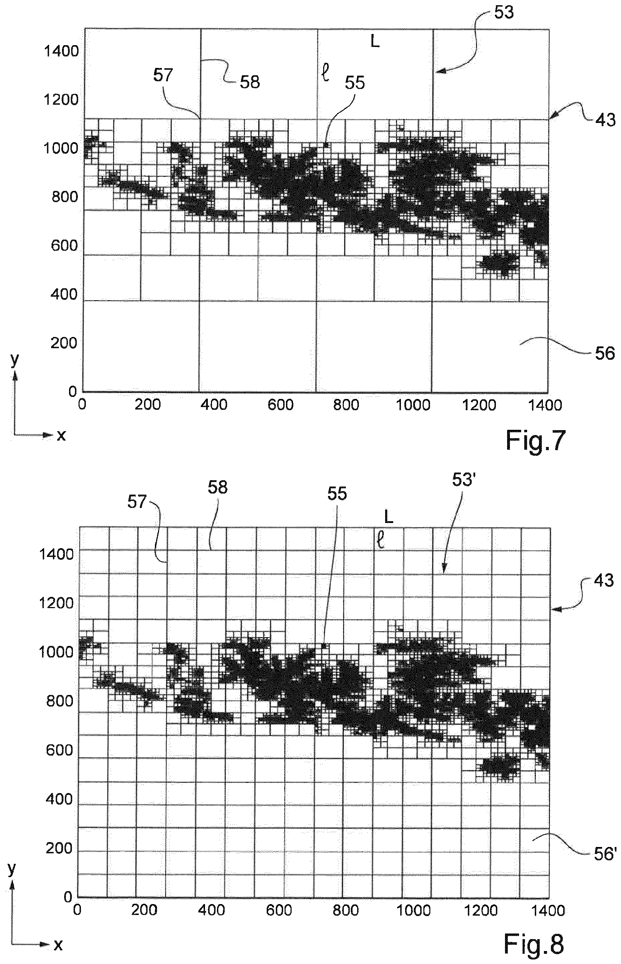

L'exemple illustré à la figure 6 correspond au maillage adaptatif 52 d'un premier palier 42 agencé à une première altitude Z1. De même, l'exemple illustré à la figure 7 correspond au maillage adaptatif 53 d'un deuxième palier 43 agencé à une seconde altitude Z2.

Cependant, l'exemple tel qu'illustré à la figure 8 correspond au maillage adaptatif 53' du deuxième palier 43 dans lequel la longueur L et la largeur l de certaines des cases autorisées 56' ont été récursivement réduites. Un tel maillage adaptatif 53' permet en effet de fournir un bon compromis afin d'améliorer la qualité du chemin aérien 40 sans être préjudiciable pour le temps de calcul global et la mémoire consommée par la pluralité de graphes 2D 61-62, 61'-62'.

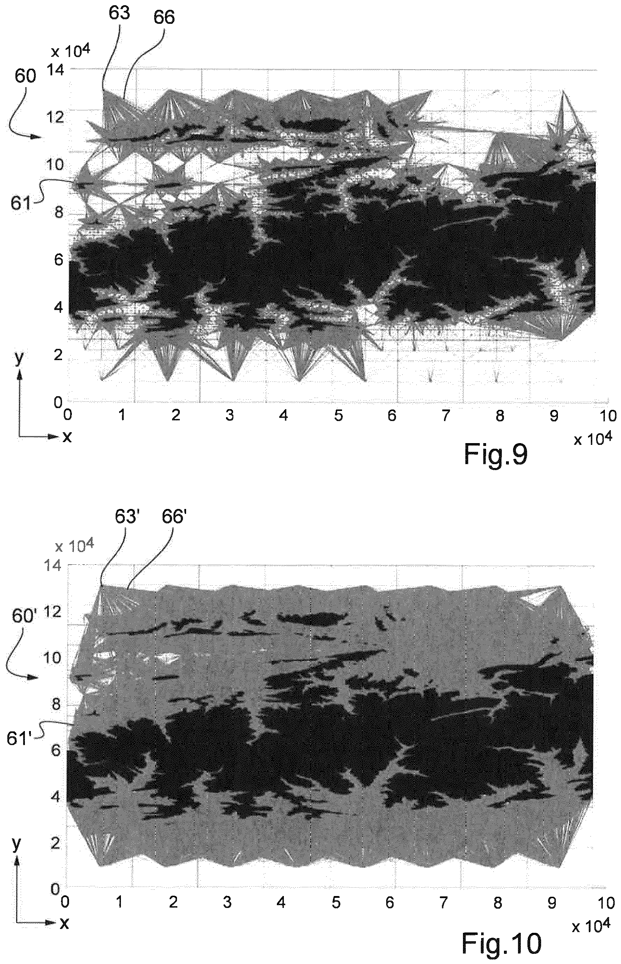

Au surplus, un tel procédé de planification 10, 20 comporte également des étapes successives de construction 14-14', 24-24' pour construire un premier ensemble 60, 60' formé par une pluralité de graphes 2D 61-62, 61'-62' non-orientés en deux dimensions, tels qu'illustrés aux figures 9 et 10. Chaque graphe 2D 61-62, 61'-62' est ainsi généré pour chacun des paliers 42, 43, 44 et comporte une pluralité de sommets 63, 67, 63', 67' agencés au milieu des cases autorisées 56, 56' pour le chemin aérien 40 et une pluralité d'arêtes 66, 66' reliant deux sommets 63, 67, 63', 67' entre eux sans couper l'une des cases interdites 55.

De plus, ces graphes 2D 61-62, 61'-62' correspondent respectivement, pour chacun des paliers 42, 43, 44, à un ensemble de positions autorisées pour le chemin aérien 40.

Telles que représentées aux figures 9 et 10, les arêtes 66, 66' des graphes 2D 61-62, 61'-62' comportent respectivement chacune une longueur maximale inférieure à une valeur de seuil prédéterminée. Une telle longueur maximale des arêtes 66, 66' des graphes 2D 61-62, 61'-62' est paramétrable pour chacun des paliers 42, 43, 44. Telle que représentée, cette longueur maximale des arêtes 66 correspondant au graphe 2D 61 de la figure 9 peut ainsi être choisie inférieure à la longueur maximale des arêtes 66' correspondant au graphe 2D 61' de la figure 10.

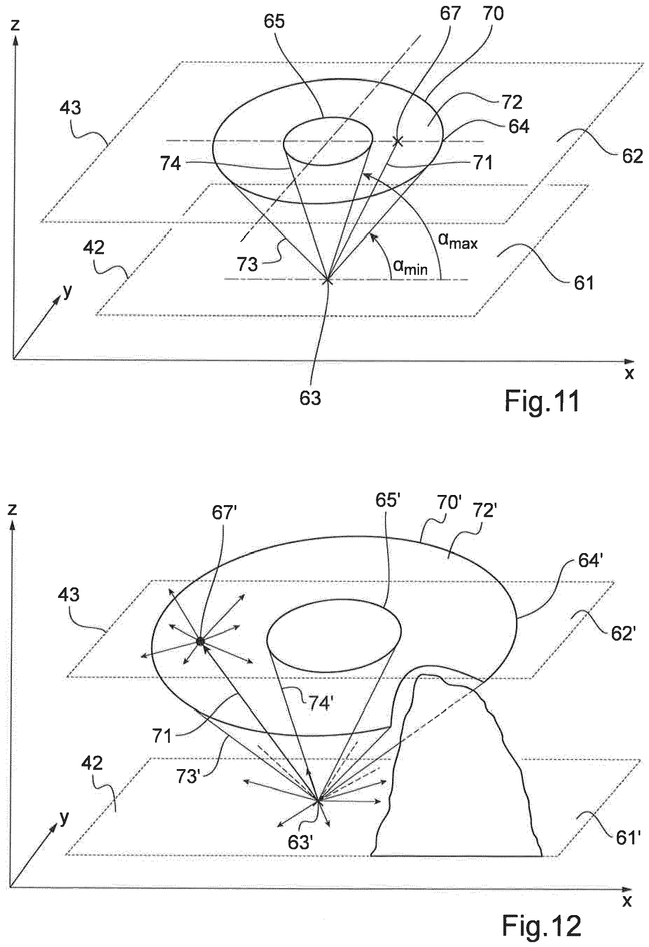

Toujours selon les figures 3 et 4, un tel procédé de planification 10, 20 comporte également des étapes successives de détermination 15-15', 25-25' pour déterminer un deuxième ensemble 70, 70' tel que représenté aux figures 11 et12.

Un tel deuxième ensemble 70, 70' est formé par une pluralité d'arcs de raccordement 71 pour chacun des sommets 63, 67, 63', 67' des graphes 2D 61-62, 61'-62. Par ailleurs, chaque arc de raccordement 71 s'étend entre un premier sommet 63, 63' appartenant à un premier graphe 2D 61, 61' correspondant à un premier palier 42 et un deuxième sommet 67, 67' appartenant à un deuxième graphe 2D 62, 62' correspondant à un deuxième palier 43.

En outre, les premier et deuxième paliers 42, 43 sont quant à eux formés par deux paliers consécutifs agencés l'un au dessus de l'autre.

Tel que représenté à la figure 11, un tel deuxième ensemble 70 formé par une pluralité d'arcs de raccordement 71 peut comporter une pluralité de sous-ensembles 72 formés respectivement, à chaque sommet 63 d'un graphe 2D 61 éloigné des cases interdites 55, par un volume en forme de cône de révolution creux. Une telle forme de cône creux est ainsi délimitée d'une part par une première surface conique de révolution 73 correspondant à un angle minimal αₘᵢₙ de montée/descente de l'aéronef 1 depuis un premier sommet 63 du premier graphe 2D 61 vers un premier cercle 64 agencé dans le plan formé par le deuxième palier 43 et contenant le deuxième graphe 2D 62 et d'autre part par une deuxième surface conique de révolution 74 correspondant à un angle maximal αₘₐₓ de montée/descente de l'aéronef 1 depuis le premier sommet 63 du premier graphe 2D 61 vers un second cercle 65 agencé dans le plan formé par le deuxième palier 43 et contenant le deuxième graphe 2D 62.

De tels angles minimal αₘᵢₙ et maximal αₘₐₓ sont ainsi mesurés dans un plan vertical entre un plan horizontal défini par le premier palier 42 du premier graphe 2D 61 et respectivement des première et deuxième génératrices des première et deuxième surfaces coniques de révolution 73 et 74 passant respectivement par le premier cercle 64 du deuxième graphe 2D 62 et le second cercle 65 du deuxième graphe 2D 62. En outre, de tels angles minimal αₘᵢₙ et maximal αₘₐₓ permettent alors de définir une couronne circulaire dans le deuxième graphe 2D 62 à l'intérieur de laquelle sont recherchés les sommets du graphe 62 pour établir les arcs de raccordements 71 avec le premier sommet 63 du premier graphe 2D 61.

Tel que représenté à la figure 12, un tel deuxième ensemble 70' formé par une pluralité d'arcs de raccordement 71 peut comporter une pluralité de sous-ensembles 72' formés respectivement, à chaque sommet 63' d'un graphe 2D 61' proche d'une case interdite 55, par un volume de forme quelconque présentant au moins partiellement une forme de cône de révolution creux. Comme précédemment, une telle forme de cône creux est délimitée d'une part par une première surface conique 73' de révolution correspondant à un angle minimal αₘᵢₙ de montée/descente de l'aéronef 1 depuis un premier sommet 63' du premier graphe 2D 61' vers un premier cercle 64' du deuxième graphe 2D 62' et d'autre part par une deuxième surface conique de révolution 74' correspondant à un angle maximal αₘₐₓ de montée/descente de l'aéronef 1 depuis le premier sommet 63' du premier graphe 2D 61' vers un second cercle 65' du deuxième graphe 2D 62'.

De façon analogue, les angles minimal αₘᵢₙ et maximal αₘₐₓ sont mesurés dans un plan vertical entre un plan horizontal défini par le premier palier 42 du premier graphe 2D 61' et respectivement des première et deuxième génératrices des première et deuxième surfaces coniques de révolution 73' et 74' passant respectivement par le premier cercle 64' du deuxième graphe 2D 62' et le second cercle 65' du deuxième graphe 2D 62'.

Aux figures 11 et 12 les angles minimal αₘᵢₙ et maximal αₘₐₓ ont été représentés pour simplifier comme étant des angles de montée entre un premier palier 42 et un deuxième palier 43. Bien entendu, de tels deuxièmes ensembles 70 et 70' peuvent également comporter une pluralité d'arcs de raccordement 71 descendants et les angles minimal αₘᵢₙ et maximal αₘₐₓ être formés par des angles correspondant à une trajectoire de descendante de l'aéronef 1.

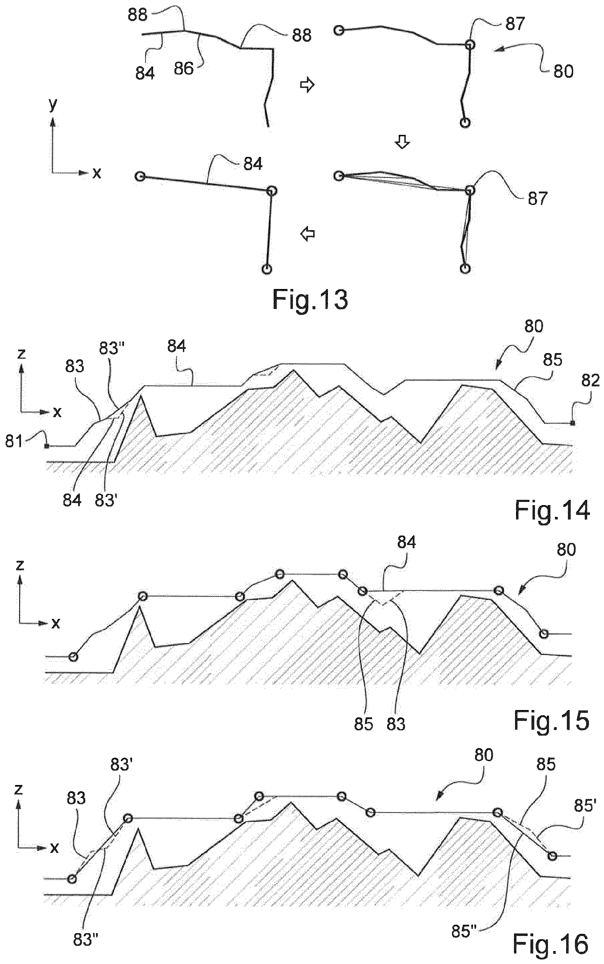

Enfin, un tel procédé de planification 10, 20 comporte une étape de fusion 16, 26 pour fusionner le premier ensemble 60, 60' formé par les graphes 2D 61-62, 61'-62' avec le deuxième ensemble 70, 70' formé par les arcs de raccordement 71. Une telle étape de fusion 16, 26 génère alors un graphe 3D 80, tel que représenté partiellement aux figures 13 à 16. Un tel graphe 3D 80 tel que représenté selon une coupe verticale est de type non-orienté en trois dimensions permettant une planification d'un chemin aérien 40 pour l'aéronef 1.

Tel que représenté à la figure 4, le procédé de planification 20 peut également comporter une étape supplémentaire d'optimisation 28 pour optimiser au moins une trajectoire de décollage et/ou d'atterrissage.

Tel que représenté à la figure 4, le procédé de planification 20 peut quant à lui comporter une étape supplémentaire de construction 29 pour construire le chemin aérien 40 pour l'aéronef 1 en calculant le plus court chemin entre un point de départ 81 et un point d'arrivée 82 sur le graphe 3D 80. Un tel chemin aérien 40 comporte alors au moins un tronçon ascendant 83, au moins un tronçon horizontal 84 et au moins un tronçon descendant 85.

Comme déjà évoqué précédemment pour l'ensemble des sommets 63-66, 63'-66' des graphes 2D 61-62, 61'-62', l'angle minimal αₘᵢₙ de montée/descente et l'angle maximal αₘₐₓ de montée/descente sont respectivement variables en fonction d'un type de mission de l'aéronef 1 et/ou des performances de vol de l'aéronef 1 et peuvent être volontairement limités par le pilote lors d'une utilisation de l'interface 3 pour saisir et/ou transférer des données de missions au système de planification 2.

Tel que représenté à la figure 4, le procédé de planification 20 peut également comporter une première étape de simplification 31 mise en oeuvre après l'étape de construction 29. Telle que représentée en détail à la figure 13, cette première étape de simplification 31 permet de simplifier le chemin aérien 40 en supprimant des zigzags 86 dans au moins un tronçon horizontal 84.

Dans le plan horizontal, en considérant le plan de vol généré à l'étape de construction 29, l'étape de simplification 31 définit des « points tournants majeurs » 87, c'est à dire comportant un changement angulaire supérieur à un seuil prédéterminé, et des « points tournant mineurs » 88 c'est à dire comportant un changement angulaire inférieur au seuil prédéterminé.

Entre chaque point tournant majeur 87, des points tournants mineurs 88 sont supprimés tant qu'aucune collision avec le terrain et/ou des obstacles n'est détectée. Si lors d'une tentative de suppression d'un point tournant mineur 88, une collision est détectée, le point tournant mineur 88 en question devient majeur 87 et la recherche de suppression se poursuit en aval de ce dernier. Après avoir parcouru l'ensemble du chemin aérien 40, celui-ci est simplifié par retrait de tous les points tournants mineurs 88.

Tel que représenté à la figure 4, le procédé de planification 20 peut également comporter une deuxième étape de simplification 32 mise en oeuvre après l'étape de construction 29.

Telle que représentée plus en détail à la figure 14, cette deuxième étape de simplification 32 permet de simplifier le chemin aérien 40 en remplaçant au moins un tronçon horizontal 84 situé entre deux tronçons ascendants 83, 83' par un autre tronçon ascendant 83" ou alternativement en remplaçant au moins un tronçon horizontal 84 situé entre deux tronçons descendants 85, 85' par un autre tronçon descendant 85".

Tel que représenté à la figure 4, le procédé de planification 20 peut également comporter une troisième étape de simplification 33 mise en oeuvre après l'étape de construction 29.

Telle que représentée plus en détail à la figure 15, la troisième étape de simplification 33 permet de simplifier le chemin aérien 40 en remplaçant au moins un tronçon descendant 85 suivi d'un tronçon ascendant 83 par un tronçon horizontal 84.

Tel que représenté à la figure 4, le procédé de planification 20 peut également comporter une quatrième étape de simplification 34 mise en oeuvre après l'étape de construction 29.

Telle que représentée plus en détail à la figure 16, la quatrième étape de simplification 34 permet de simplifier le chemin aérien 40 en remplaçant au moins deux tronçons ascendants 83, 83' consécutifs présentant deux angles de montée distincts par un unique tronçon ascendant 83" avec un angle de montée constant ou alternativement en remplaçant au moins deux tronçons descendants 85, 85' consécutifs présentant deux angles de descente distincts par un unique tronçon descendant 85" avec un angle de descente constant.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de planification (10, 20) d'un chemin aérien (40) pour un aéronef (1), ledit procédé (10, 20) comportant une première étape d'extraction (11, 21) pour extraire des premières données, lesdites premières données étant issues d'au moins une base de données « terrain » contenant des données topographiques d'une zone de vol (41) lors d'une mission dudit aéronef (1),
**caractérisé en ce que** ledit procédé (10, 20) comporte au moins :
• une étape de discrétisation horizontale (12, 22) pour discrétiser en plusieurs paliers parallèles (42, 43, 44) ladite zone de vol (41) dudit aéronef (1), lesdits paliers parallèles (42, 43, 44) étant agencés parallèlement entre eux et régulièrement espacés les uns des autres suivant une direction en élévation Z ;
• des étapes successives de génération (13-13', 23-23') pour générer un maillage adaptatif (52, 53, 53', 54) pour chacun desdits paliers (42, 43, 44), ledit maillage adaptatif (52, 53, 53', 54) comportant d'une part des cases interdites (55) pour ledit chemin aérien (40) et d'autre part des cases autorisées (56, 56') pour ledit chemin aérien (40), lesdites cases interdites (55)/autorisées (56, 56') pour ledit chemin aérien (40) étant générées au moins à partir desdites premières données, lesdites cases interdites (55)/autorisées (56, 56') comportant respectivement chacune une longueur L suivant une direction longitudinale X et une largeur I suivant une direction transversale Y, ladite longueur L et ladite largeur I de chacune desdites cases interdites (55)/autorisées (56, 56') dudit maillage adaptatif (52, 53, 53', 54) étant générées itérativement en fonction de la densité desdites cases interdites (55) ;
• des étapes successives de construction (14-14', 24-24') pour construire un premier ensemble (60, 60') formé par une pluralité de graphes 2D (61-62, 61'-62') non-orientés en deux dimensions, chaque graphe 2D (61-62, 61'-62') étant généré pour chacun desdits paliers (42, 43, 44) et comportant une pluralité de sommets (63, 67, 63', 67') agencés au milieu desdites cases autorisées (56, 56') pour ledit chemin aérien (40) et une pluralité d'arêtes (66, 66') reliant deux sommets (63, 67, 63', 67') entre eux sans couper l'une desdites cases interdites (55), lesdits graphes 2D (61-62, 61'-62') correspondant, pour chacun desdits paliers (42, 43, 44), à un ensemble de positions autorisées pour ledit chemin aérien (40),
• des étapes successives de détermination (15-15', 25-25') pour déterminer un deuxième ensemble (70, 70') formé par une pluralité d'arcs de raccordement (71) pour chacun desdits sommets (63, 67, 63', 67') desdits graphes 2D (61-62, 61'-62'), chaque arc de raccordement (71) s'étendant entre un premier sommet (63, 63') appartenant à un premier graphe 2D (61, 61') correspondant à un premier palier (42) et un deuxième sommet (67, 67') appartenant à un deuxième graphe 2D (62, 62') correspondant à un deuxième palier (43), lesdits premier et deuxième paliers (42, 43) étant formés par deux paliers consécutifs agencés l'un au dessus de l'autre, et
• une étape de fusion (16, 26) pour fusionner ledit premier ensemble (60, 60') formé par lesdits graphes 2D (61-62, 61'-62') avec ledit deuxième ensemble (70, 70') formé par lesdits arcs de raccordement (71), ladite étape de fusion (16, 26) générant un graphe 3D (80) non-orienté en trois dimensions permettant une planification d'un chemin aérien (40) pour ledit aéronef (1).

2. Procédé selon la revendication 1,
**caractérisé en ce que** ledit maillage adaptatif (52, 53, 53', 54) est de type « Quadtree », en langue anglaise, correspondant à une structure de données de type arbre comportant une pluralité de noeuds (57) reliés entre eux respectivement chacun par quatre fils (58).

3. Procédé selon l'une quelconque des revendications 1 à 2,
**caractérisé en ce que** ladite longueur L et/ou ladite largeur l de certaines desdites cases autorisées (56') est/sont récursivement réduites.

4. Procédé selon l'une quelconque des revendications 1 à 3,
**caractérisé en ce que** ledit procédé (20) comporte une deuxième étape d'extraction (27) pour extraire des deuxièmes données, lesdites deuxièmes données étant issues d'au moins une base de données météorologique contenant des données météorologiques de ladite zone de vol (41) dudit aéronef (1) et/ou une base de données obstacles contenant des données d'obstacles matériels de ladite zone de vol (41) dudit aéronef (1), lesdites cases interdites (55)/autorisées (56, 56') pour ledit chemin aérien (40) étant générées à partir desdites premières et deuxièmes données.

5. Procédé selon l'une quelconque des revendications 1 à 4,
**caractérisé en ce que** lesdites arêtes (66, 66') desdits graphes 2D (61-62, 61'-62') comportent respectivement chacune une longueur maximale inférieure à une valeur de seuil prédéterminée.

6. Procédé selon la revendication 5,
**caractérisé en ce que** ladite longueur maximale desdites arêtes (66, 66') desdits graphes 2D (61-62, 61'-62') est paramétrable en fonction de chacun desdits paliers (42, 43, 44).

7. Procédé selon l'une quelconque des revendications 1 à 6,
**caractérisé en ce que** ledit deuxième ensemble (70) formé par une pluralité d'arcs de raccordement (71) comporte une pluralité de sous-ensembles (72) formés respectivement, à chaque sommet (63) d'un graphe 2D (61) éloigné desdites cases interdites (55), par un volume en forme de cône de révolution creux, ladite forme de cône creux étant délimitée d'une part par une première surface conique de révolution (73) correspondant à un angle minimal αₘᵢₙ de montée/descente dudit aéronef (1) depuis un premier sommet (63) dudit premier graphe 2D (61) vers un premier cercle (64) dudit deuxième graphe 2D (62) et d'autre part par une deuxième surface conique de révolution (74) correspondant à un angle maximal αₘₐₓ de montée/descente dudit aéronef (1) depuis ledit premier sommet (63) dudit premier graphe 2D (61) vers un second cercle (65) dudit deuxième graphe 2D (62), lesdits angles minimal αₘᵢₙ et maximal αₘₐₓ étant mesurés dans un plan vertical entre un plan horizontal défini par ledit premier palier (42) dudit premier graphe 2D (61) et respectivement des première et deuxième génératrices desdites première et deuxième surfaces coniques de révolution (73) et (74) passant respectivement par ledit premier cercle (64) dudit deuxième graphe 2D (62) et ledit second cercle (65) dudit deuxième graphe 2D (62).

8. Procédé selon l'une quelconque des revendications 1 à 7,
**caractérisé en ce que** ledit deuxième ensemble (70') formé par une pluralité d'arcs de raccordement (71) comporte une pluralité de sous-ensembles (72') formés respectivement, à chaque sommet (63') d'un graphe 2D (61') proche d'une case interdite (55), par un volume de forme quelconque présentant au moins partiellement une forme de cône de révolution creux, ladite forme de cône creux étant délimitée d'une part par une première surface conique (73') de révolution correspondant à un angle minimal αₘᵢₙ de montée/descente dudit aéronef (1) depuis un premier sommet (63') dudit premier graphe 2D (61') vers un premier cercle (64') dudit deuxième graphe 2D (62') et d'autre part par une deuxième surface conique de révolution (74') correspondant à un angle maximal αₘₐₓ de montée/descente dudit aéronef (1) depuis ledit premier sommet (63') dudit premier graphe 2D (61') vers un second cercle (65') dudit deuxième graphe 2D (62'), lesdits angles minimal αₘᵢₙ et maximal αₘₐₓ étant mesurés dans un plan vertical entre un plan horizontal défini par ledit premier palier (42) dudit premier graphe 2D (61') et respectivement des première et deuxième génératrices desdites première et deuxième surfaces coniques de révolution (73') et (74') passant respectivement par ledit premier cercle (64') dudit deuxième graphe 2D (62') et ledit second cercle (65') dudit deuxième graphe 2D (62').

9. Procédé selon l'une quelconque des revendications 7 à 8,
**caractérisé en ce que**, pour l'ensemble desdits sommets (63-66, 63'-66') desdits graphes 2D (61-62, 61'-62'), ledit angle minimal αₘᵢₙ de montée/descente dudit aéronef (1) et ledit angle maximal αₘₐₓ de montée/descente dudit aéronef (1) sont respectivement variables en fonction d'un type de mission dudit aéronef (1) et/ou des performances de vol dudit aéronef (1).

10. Procédé selon l'une quelconque des revendications 1 à 9,
**caractérisé en ce que** ledit procédé (20) comporte une étape d'optimisation (28) pour optimiser au moins une trajectoire de décollage et/ou d'atterrissage.

11. Procédé selon l'une quelconque des revendications 1 à 10,
**caractérisé en ce que** ledit procédé (20) comporte une étape de construction (29) pour construire ledit chemin aérien (40) pour ledit aéronef (1) en calculant le plus court chemin entre un point de départ (81) et un point d'arrivée (82) sur ledit graphe 3D (80), ledit chemin aérien (40) comportant au moins un tronçon ascendant (83), au moins un tronçon horizontal (84) et au moins un tronçon descendant (85).

12. Procédé selon la revendication 11,
**caractérisé en ce que** ledit procédé (20) comporte au moins une première étape de simplification (31) mise en oeuvre après ladite étape de construction (29), ladite au moins une première étape de simplification (31) permettant de simplifier ledit chemin aérien (40) pour ledit aéronef (1) en supprimant des zigzags (86) dans au moins un tronçon horizontal (84).

13. Procédé selon l'une quelconque des revendications 11 à 12,
**caractérisé en ce que** ledit procédé (20) comporte au moins une deuxième étape de simplification (32) mise en oeuvre après ladite étape de construction (29), ladite au moins une deuxième étape de simplification (32) permettant de simplifier ledit chemin aérien (40) pour ledit aéronef (1) en remplaçant au moins un tronçon horizontal (84) situé entre deux tronçons ascendants (83, 83') par un autre tronçon ascendant (83") ou alternativement en remplaçant au moins un tronçon horizontal (84) situé entre deux tronçons descendants (85, 85') par un autre tronçon descendant (85").

14. Procédé selon l'une quelconque des revendications 11 à 13,
**caractérisé en ce que** ledit procédé (20) comporte au moins une troisième étape de simplification (33) mise en oeuvre après ladite étape de construction (29), ladite au moins une troisième étape de simplification (33) permettant de simplifier ledit chemin aérien (40) pour ledit aéronef (1) en remplaçant au moins un tronçon descendant (85) suivi d'un tronçon ascendant (83) par un tronçon horizontal (84).

15. Procédé selon l'une quelconque des revendications 11 à 14,
**caractérisé en ce que** ledit procédé (20) comporte au moins une quatrième étape de simplification (34) mise en oeuvre après ladite étape de construction (29), ladite au moins une quatrième étape de simplification (34) permettant de simplifier ledit chemin aérien (40) pour ledit aéronef (1) en remplaçant au moins deux tronçons ascendants (83, 83') consécutifs présentant deux angles de montée distincts par un unique tronçon ascendant (83") avec un angle de montée constant ou alternativement en remplaçant au moins deux tronçons descendants (85, 85') consécutifs présentant deux angles de descente distincts par un unique tronçon descendant (85") avec un angle de descente constant.

16. Procédé selon l'une quelconque des revendications 1 à 15,
**caractérisé en ce que** ledit premier ensemble (60, 60') formé par lesdits graphes 2D (61-62, 61'-62') est limité à un nombre prédéterminé de graphes 2D (61-62, 61'-62') situés en dessous d'une altitude maximale à ne pas dépasser par ledit aéronef (1).

17. Procédé selon l'une quelconque des revendications 1 à 16,
**caractérisé en ce que** ledit procédé (10, 20) est mis en oeuvre en tout ou partie lors d'une phase de prétraitement préalablement à une mission dudit aéronef (1).

18. Procédé selon l'une quelconque des revendications 1 à 17,
**caractérisé en ce que** ledit procédé (10, 20) est mis en oeuvre en tout ou partie lors d'une mission dudit aéronef (1) par au moins une unité de traitement (6) embarquée à bord dudit aéronef (1).

19. Système de planification (2) d'un chemin aérien (40) pour un aéronef (1), ledit système (2) comportant une unité d'extraction (4) pour extraire d'une unité de stockage (5) des premières données, lesdites premières données étant issues d'au moins une base de données « terrain » contenant des données topographiques d'une zone de vol (41) lors d'une mission dudit aéronef (1),
**caractérisé en ce que** ledit système (2) comporte au moins une unité de traitement (6) pour :
• discrétiser en plusieurs paliers parallèles (42, 43, 44) ladite zone de vol (41) dudit aéronef (1), lesdits paliers parallèles (42, 43, 44) étant agencés parallèlement entre eux et régulièrement espacés les uns des autres suivant une direction en élévation Z ;
• générer un maillage adaptatif (52, 53, 53', 54) pour chacun desdits paliers (42, 43, 44), ledit maillage adaptatif (52, 53, 53', 54) comportant d'une part des cases interdites (55) pour ledit chemin aérien (40) et d'autre part des cases autorisées (56, 56') pour ledit chemin aérien (40), lesdites cases interdites (55)/autorisées (56, 56') pour ledit chemin aérien (40) étant générées au moins à partir desdites premières données, lesdites cases interdites (55)/autorisées (56, 56') comportant respectivement chacune une longueur L suivant une direction longitudinale X et une largeur I suivant une direction transversale Y, ladite longueur L et ladite largeur I de chacune desdites cases interdites (55)/autorisées (56, 56') dudit maillage adaptatif (52, 53, 53', 54) étant générées itérativement en fonction de la densité desdites cases interdites (55) ;
• construire un premier ensemble (60, 60') formé par une pluralité de graphes 2D (61-62, 61'-62') non-orientés en deux dimensions, chaque graphe 2D (61-62, 61'-62') étant généré pour chacun desdits paliers (42, 43, 44) et comportant une pluralité de sommets (63, 67, 63', 67') agencés au milieu desdites cases autorisées (56, 56') pour ledit chemin aérien (40) et une pluralité d'arêtes (66, 66') reliant deux sommets (63, 67, 63', 67') entre eux sans couper l'une desdites cases interdites (55), lesdits graphes 2D (61-62, 61'-62') correspondant, pour chacun desdits paliers (42, 43, 44), à un ensemble de positions autorisées pour ledit chemin aérien (40),
• déterminer un deuxième ensemble (70, 70') formé par une pluralité d'arcs de raccordement (71) pour chacun desdits sommets (63, 67, 63', 67') desdits graphes 2D (61-62, 61'-62'), chaque arc de raccordement (71) s'étendant entre un premier sommet (63, 63') appartenant à un premier graphe 2D (61, 61') correspondant à un premier palier (42) et un deuxième sommet (67, 67') appartenant à un deuxième graphe 2D (62, 62') correspondant à un deuxième palier (43), lesdits premier et deuxième paliers (42, 43) étant formés par deux paliers consécutifs agencés l'un au dessus de l'autre, et
• fusionner ledit premier ensemble (60, 60') formé par lesdits graphes 2D (61-62, 61'-62') avec ledit deuxième ensemble (70, 70') formé par lesdits arcs de raccordement (71), et générer un graphe 3D (80) non-orienté en trois dimensions permettant une planification d'un chemin aérien (40) pour ledit aéronef (1).

20. Aéronef (1) **caractérisé en ce qu'**il comporte un système de planification (2) d'un chemin aérien (40) selon la revendication 19 et au moins une interface (3) permettant à un pilote dudit aéronef (1) de saisir et/ou de transférer des données de mission audit système de planification (2).
